# FASCICULE DE BREVET EUROPEEN

(11) **EP 0 865 470 B1**
(45) Date de publication et mention de la délivrance du brevet: **26.03.2003**
(21) Numéro de dépôt: 96940944.0
(22) Date de dépôt: 05.12.1996
(51) Int. Cl.: C09D 167/00, C09D 5/03

(54) **COMPOSITIONS THERMODURCISSABLES EN POUDRE POUR REVETEMENTS**
WÄRMEHÄRTBARE PULVERFÖRMIGE ÜBERZUGSMITTELZUSAMMENSETZUNG
POWDERED THERMOSETTING COMPOSITIONS FOR COATINGS

(30) Priorité: 06.12.1995 BE 9501000
(43) Date de publication de la demande: 23.09.1998
(73) Titulaire: UCB, S.A., 1070 Bruxelles (BE)
(72) Inventeur: MOENS, Luc, B-1640 Sint-Genesius-Rode (BE); MAETENS, Daniel, B-1080 Bruxelles (BE); LOOSEN, Patrick, B-2870 Ruisbroek (BE); LOUTZ, Jean-Marie, B-1080 Bruxelles (BE)
(86) Numéro de dépôt international: BE9600127
(87) Numéro de publication internationale: WO97020895

(56) Documents cités:
- EP-A- 0 365 428
- WO-A-91/14745
- DATABASE WPI Week 8451 Derwent Publications Ltd., London, GB; AN 84-315386 XP002010679 & JP 59 197 426 A (TAKEDA CHEMICAL IND KK) , 9 Novembre 1984

## Description

La présente invention se rapporte à des compositions thermodurcissables en poudre comprenant comme liant un mélange d'un polyester amorphe contenant des groupes carboxyle, d'un polyester semi-cristallin contenant des groupes carboxyle, et d'un agent de réticulation ayant des groupes fonctionnels capables de réagir avec les groupes carboxyle de ces polyesters, et en particulier à des compositions thermodurcissables en poudre qui donnent par cuisson des revêtements très résistants aux intempéries et ayant de bonnes propriétés mécaniques.

L'invention se rapporte également à l'utilisation de ces compositions pour la préparation de peintures et vernis en poudre permettant de réaliser ces revêtements, de même qu'aux revêtements ainsi obtenus.

Les compositions thermodurcissables en poudre sont bien connues dans l'état de la technique et sont largement utilisées comme peintures et vernis pour le revêtement d'objets les plus divers. Les avantages de ces poudres sont nombreux; d'une part le problème des solvants est complètement supprimé, d'autre part les poudres sont utilisées à 100%, vu que seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des accessoires de l'industrie automobile, etc. Elles contiennent généralement des composés organiques thermodurcissables constituant le liant de la peinture, des charges, des pigments, des catalyseurs et des additifs divers pour adapter leur comportement à leur utilisation.

Il existe différents types de compositions thermodurcissables en poudre. Les compositions les plus connues contiennent comme liant soit un mélange de polymères contenant des groupes carboxyle tels qu'un polyester ou un polyacrylate carboxylé et de composés époxydés, comme l'isocyanurate de triglycidyle ou des copolymères acryliques contenant des groupes glycidyle ou des β-hydroxyalkylamides, soit un mélange de polymères contenant des groupes hydroxyle, le plus souvent un polyester hydroxylé, avec des isocyanates bloqués ou non, des résines de mélamine, de glycolurile, des anhydrides d'acides polycarboxyliques, etc.

Les polyesters contenant des groupes carboxyle ou des groupes hydroxyle utilisables pour la préparation de vernis et peintures en poudre ont déjà fait l'objet de nombreuses publications. Ces polyesters sont habituellement préparés à partir d'acides polycarboxyliques aromatiques, principalement l'acide téréphtalique et isophtalique et éventuellement une faible proportion d'acides dicarboxyliques aliphatiques ou cycloaliphatiques, et à partir de polyols aliphatiques divers comme par exemple l'éthylène glycol, le néopentyl glycol, le 1,4-butanediol, le triméthylolpropane, etc. Ces polyesters à base d'acides dicarboxyliques aromatiques, lorsqu'ils sont utilisés avec un agent de réticulation approprié, fournissent des compositions thermodurcissables donnant des enduits de peinture et de vernis possédant de bonnes propriétés tant en ce qui concerne leur aspect qu'en ce qui concerne leurs propriétés mécaniques (résistance au choc, flexibilité). Certains de ces polyesters et les poudres préparées à partir de ceux-ci sont aussi couramment employés en raison de leurs propriétés remarquables de résistance aux intempéries.

Ce dernier type de polyester contient généralement une majorité d'acide isophtalique en tant qu'acide. Mais si les revêtements obtenus à partir de ces polyesters présentent une bonne résistance aux intempéries, ils n'ont pas par contre une bonne résistance mécanique.

A l'heure actuelle, la grande majorité des polyesters utilisés dans les compositions thermodurcissables en poudre sont des polyesters amorphes. Or, lorsque le polyester est amorphe, il est difficile de préparer des compositions thermodurcissables pulvérulentes parfaites, parce qu'elles doivent répondre à des critères souvent contradictoires. Ainsi, ces poudres ne peuvent pas se réagglomérer pendant leur manipulation, leur transport et leur stockage, ce qui implique que le polyester amorphe doit posséder une température de transition vitreuse (Tg) suffisamment élevée. D'un autre côté, pour que les particules de poudre puissent coalescer et former un enduit parfaitement homogène et uniforme, il faut que sa viscosité à la température de cuisson, et donc la température de transition vitreuse (Tg) du polyester, soient suffisamment basses pour assurer un bon mouillage des pigments et autres matières solides accompagnant le polyester dans la formulation desdites compositions thermodurcissables en poudre. De plus, la poudre doit être susceptible de fondre à la température de cuisson pour former un film régulier avant que ne commence la réaction de réticulation conduisant au durcissement final. Pour obtenir un bon étalement du film fondu sur la surface du . substrat, il faut donc que la viscosité du polyester à l'état fondu soit suffisamment basse. En effet, une viscosité très élevée à l'état fondu empêche un bon étalement du film fondu et se traduit par une perte de la régularité et du brillant de l'enduit. Enfin, la vitesse de la réaction de réticulation de la composition, à une température donnée, ne peut être contrôlée qu'en faisant varier la quantité et/ou la nature de l'agent de réticulation et du catalyseur de réticulation éventuellement utilise.

Ces divers problemes sont résolus dans les compositions en poudre dont le liant esc constitué par un polyester semi-cristallin contenant des groupes carboxyle ou des groupes hydroxyle utilisé seul ou en mélange avec un polyester amorphe contenant des groupes carboxyle ou hydroxyle. En effet, les propriétés des polyesters semi-cristallins permettent d'éviter dans une large mesure les inconvénients precédemment décrits qu'amène le réglage de la température de transition vitreuse (Tg), de la viscosité à l'état fondu et de la réactivité des polyesters amorphes.

En premier lieu, les polyesters semi-cristallins ont un point de fusion élevé et, le cas échéant, une basse température de transition vitreuse (Tg). Cela a pour conséquence que la viscosité à l'état fondu des polyesters semi-cristallins est beaucoup plus basse que celle des polyesters amorphes de poids moléculaire comparable couramment utilisés dans les compositions thermodurcissables en poudre. Ceci signifie que les compositions de revêtement en poudre à base de polyesters semi-cristallins présentent une meilleure fluidité du film d'enduit à l'état fondu, ce qui donne des revêtements finals exempts de peau d'orange.

En outre, grâce à la cristallinité des polyesters, les poudres formulées avec un agent de réticulation approprié, présentent une très bonne stabilité au stockage. De plus, comparés aux polyesters amorphes, les polyesters semi-cristallins fournissent des enduits ayant des propriétés mécaniques remarquables.

Les compositions thermodurcissables contenant des polyesters semi-cristallins ont déjà fait l'objet d'un certain nombre de publications sous forme d'articles et de brevets. Ainsi, dans la demande de brevet international PCT WO 91/14745, on décrit des compositions de revêtement thermodurcissables en poudre comprenant comme liant un mélange d'un agent de réticulation et d'un polyester contenant des groupes carboxyle qui se compose de :
(a) 5 à 100 % en poids d'un polyester semi-cristallin contenant des groupes carboxyle, ayant un indice d'acide de 10 à 70 mg de KOH/g, et un indice d'hydroxyle inférieur à 11 mg de KOH/g, et
(b) 0 à 95% en poids d'un polyester amorphe contenant des groupes carboxyle ayant un indice d'acide de 15 à 90 mg de KOH/g.
L'agent de réticulation peut être un composé polyépoxydé ou un bis(β-hydroxyalkylamide).

D'après les exemples de réalisation, ces polyesters semi-cristallins sont préparés en un ou deux stades, à partir d'une quantité prépondérante d'acide téréphtalique ou d'acide 1,4-cyclohexanedicarboxylique et d'une faible proportion d'acide adipique, succinique ou 1,12-dodécanedioïque, d'une part et d'un diol aliphatique tel que le 1,6-hexanediol ou le 1,10-décanediol, d'autre part.

Ces polyesters semi-cristallins possèdent un poids moléculaire moyen en nombre compris entre 1.600 à 12.000, une ou plusieurs températures de transition vitreuse (Tg) inférieures à 55°C, un point de fusion de 50°C à 200°C et une viscosité à l'état fondu de 100 à 7.000 mPa.s à 200°C et de 4.000 à 20.000 mPa.s à 160°C. Les constituants des polyesters amorphes sont les constituants habituels bien connus dans l'état de la technique, par exemple les acides téréphtalique, isophtalique, adipique, le néopentylglycol, le 1,6-hexanediol, le triméthylolpropane, etc. Malgré le Tg bas du polyester semi-cristallin, ces compositions en poudre sont stables à l'entreposage et les enduits thermodurcis présentent un aspect amélioré, exempt de peau d'orange et de meilleures propriétés mécaniques, en particulier une excellente flexibilité. Dans la demande de brevet international PCT WO 94/02552, on décrit des compositions de revêtement thermodurcissables en poudre comprenant:
(a) un polyester semi-cristallin plastifiant composé de diacides carboxyliques aliphatiques linéaires ayant de 4 à 22 atomes de carbone, de diols aliphatiques linéaires ayant de 2 à 20 atomes de carbone, et, éventuellement, de triols ou triacides, ce polyester ayant un point de fusion de 40°C à 200°C et un indice d'acide ou d'hydroxyle de 20 à 120; de préférence, le polyester est constitué de plus de 90 moles d'acide 1,12-dodécanedioïque pour 100 moles des acides, et de plus de 90 moles de 1,6-hexanediol pour 100 moles des polyols;
(b) un polyester amorphe réticulable; de préférence, ce polyester est essentiellement constitué d'acide téréphtalique et de néopentylglycol, avec un peu de triméthylolpropane, et il possède un indice d'acide ou d'hydroxyle de 25 à 80;
(c) un agent de réticulation qui, pour les polyesters contenant des groupes carboxyle, est le bis(N,N-dihydroxyéthyl)adipamide ou le triglycidylisocyanurate.

Par ses propriétés de plastifiant, le polyester semi-cristallin présent dans les compositions thermodurcissables en poudre décrit dans cette demande de brevet, permet d'obtenir des revêtements ayant une meilleure apparence générale (brillant, égalité de surface, absence de peau d'orange) et une meilleure flexibilité; en outre, la stabilité au stockage de ces compositions n'est pas réduite par la présence de ce polyester semi-cristallin.

La demande de brevet international PCT WO 95/01407 concerne des compositions thermodurcissables en poudre pour revêtements comprenant:
(a) un polyester semi-cristallin aliphatique constitué d'acide cyclohexanedicarboxylique et de diols ayant un nombre pair d'atomes de carbone, allant de 4 à 10; le 1,4-butanediol est utilisé de préférence; ce polyester possède une température de fusion allant de 60°C à 160°C et un indice d'acide ou d'hydroxyle de 30 à 80;
(b) un polyester amorphe aliphatique constitué d'acide cyclohexanedicarboxylique et d'un diol cycloaliphatique, par exemple le 2,2,4,4-tétraméthyl-1,3-cyclobutanediol, ou le bisphénol A hydrogéné ou encore le 1,4-cyclohexanediol; ce polyester amorphe possède une température de transition vitreuse allant de 50°C à 70°C et un indice d'acide ou d'hydroxyle de 30 à 80.
(c) un agent de réticulation qui, lorsque le polyester contient des groupes carboxyle, peut être le triglycidylisocyanurate ou un β-hydroxyalkylamide.

La présence du polyester semi-cristallin dans les compositions thermodurcissables en poudre permet d'obtenir des revêtements dont la résistance à l'impact est améliorée, tandis qu'une bonne résistance aux intempéries, est maintenue, d'après cette demande de brevet.

Les polyesters semi-cristallins et les compositions thermodurcissables en poudre qui en contiennent possèdent donc dans l'ensemble des propriétés plus avantageuses que les polyesters amorphes utilisés seuls. Cependant, en dépit de leurs propriétés avantageuses, les polyesters semi-cristallins utilisés dans des compositions thermodurcissables en poudre donnent des enduits dont la résistance aux intempéries laisse à désirer.

C'est pourquoi, la demanderesse a effectué des travaux de recherche en s'imposant pour objectif, de trouver des compositions thermodurcissables en poudre donnant des enduits de peinture ou de vernis dont la qualité est au moins égale à celle des enduits obtenus à partir de compositions contenant des polyesters semi-cristallins de l'état de la technique quant à la réactivité, la fluidité à l'état fondu, la flexibilité, la résistance aux chocs, l'égalité de surface, etc., mais qui, au surplus, sont aptes à fournir des enduits particulièrement résistants aux intempéries.

On a maintenant fait la découverte surprenante que cet objectif est atteint lorsque pour la préparation des compositions de revêtement en poudre, on utilise un mélange de polyesters semi-cristallins contenant des groupes carboxyle et de polyesters amorphes contenant des groupes carboxyle, le polyester semi-cristallin étant essentiellement préparé au départ de 1,4-cyclohexanediol comme constituant alcoolique et d'un acide dicarboxylique aliphatique saturé à chaîne linéaire comme constituant acide, le polyester amorphe étant essentiellement préparé au départ d'acide isophtalique comme constituant acide et de néopentylglycol et/ou de 2-butyl-2-éthyl-1,3-propanediol comme constituant alcoolique.

C'est pourquoi, conformément à la présente invention, on apporte des nouvelles compositions thermodurcissables en poudre comprenant comme liant un mélange de polyesters contenant des groupes carboxyle et d'un agent de réticulation ayant des groupes fonctionnels capables de réagir avec les groupes carboxyle, caractérisé en ce que les polyesters comprennent
(a) un polyester semi-cristallin contenant des groupes carboxyle, constitué, par rapport au total des alcools, de 85 à 100 moles% de 1,4-cyclohexanediol et de 0 à 15 moles% d'au moins un autre polyol aliphatique et/ou cycloaliphatique, et, par rapport au total des acides, de 85 à 100 moles% d'un acide aliphatique dicarboxylique saturé à chaîne linéaire ayant de 4 à 14 atomes de carbone et de 0 à 15 moles% d'au moins un autre acide polycarboxylique aliphatique, et/ou cycloaliphatique et/ou aromatique, et
(b) un polyester amorphe contenant des groupes carboxyle constitué, par rapport au total des acides, de 70 à 100 moles% d'acide isophtalique et de 0 à 30 moles% d'au moins un autre acide polycarboxylique aliphatique, et/ou cycloaliphatique et/ou aromatique, et, par rapport au total des alcools, de 70 à 100 moles% de néopentylglycol et/ou de 2-butyl-2-éthyl-1,3-propanediol et de 0 à 30 moles% d'au moins un autre polyol aliphatique et/ou cycloaliphatique.

Les polyesters semi-cristallins contenant des groupes carboxyle entrant dans les compositions thermodurcissables conformes à l'invention présentent un indice d'acide de 10 à 70 mg de KOH/g, de préférence de 15 à 40 mg de KOH/g.

Ces polyesters semi-cristallins contenant des groupes carboxyle présentent en outre les caractéristiques suivantes :
- un poids moléculaire moyen en nombre compris entre 1600 et 17000, de préférence entre 2800 et 11200,
- un point de fusion bien défini d'environ 60 à 140°C, déterminé par calorimétrie à balayage différentiel (ou DSC) selon la norme ASTM D 3418, avec une vitesse de chauffage de 20°C/minute
- une température de transition vitreuse allant de -50 à 50°C (DSC), selon la norme ASTM D 3418 avec une vitesse de chauffage de 20°C/minute;
- une viscosité à l'état fondu de 5 à 10.000 mPa.s mesurée à 175°C au viscosimètre cône/plateau, (connue sous le nom de "viscosité ICI"), selon la norme ASTM D 4287-88.

Le constituant acide du polyester semi-cristallin utilisé dans les compositions thermodurcissables conformes à la présente invention contient de 85% à 100 moles % d'un acide dicarboxylique aliphatique saturé à chaîne linéaire ayant de 4 à 14 atomes de carbone. Des exemples des acides qui peuvent être utilisés sont l'acide succinique, l'acide glutarique, l'acide adipique, l'acide pimélique, l'acide subérique, l'acide azélaïque, l'acide sébacique, etc. Ces acides peuvent être utilisés sous forme de l'acide libre ou de leurs dérivés fonctionnels, en particulier sous la forme d'anhydrides. En outre, ces acides peuvent être utilisés en mélange, mais de préférence on les utilise seuls. Parmi ces acides, l'acide adipique est utilisé de préférence.

Le constituant acide du polyester semi-cristallin peut contenir également 0 à 15 moles % d'un ou plusieurs autres acides polycarboxyliques aliphatiques, et/ou cycloaliphatiques et/ou aromatiques ou leurs anhydrides, par exemple l'acide 1,4-cyclohexanedicarboxylique, l'acide fumarique, l'acide maléique, l'acide (ou l'anhydride) trimellitique ou l'acide pyromellitique.

Le constituant alcoolique du polyester semi-cristallin utilisé dans les compositions thermodurcissables conformes à la présente invention contient de 85 à 100 moles % de 1,4-cyclohexanediol. Le constituant alcoolique du polyester peut en outre contenir de 0 à 15 moles % de polyols aliphatiques ou cycloaliphatiques, tels que l'éthylène glycol, le propylène glycol, le 1,4-butanediol, le 1,6-hexanediol, le 1,4-cyclohexanediméthanol, le bisphénol A hydrogéné, le triméthylolpropane, le ditriméthylolpropane, le triméthyloléthane, le pentaérythritol et leurs mélanges. De préférence, on utilise le 1,4-cyclohexanediol seul, en tant que constituant alcoolique.

Les polyesters amorphes contenant des groupes carboxyle entrant dans les compositions thermodurcissables conformes à l'invention présentent un indice d'acide de 15 à 100, et de préférence de 30 à 70 mg de KOH/g.

Ces polyesters amorphes contenant des groupes carboxyle présentent en outre les caractéristiques suivantes:
- un poids moléculaire moyen en nombre compris entre 1100 et 15000, de préférence entre 1600 et 8500,
- une température de transition vitreuse (Tg) de 40 à 80 °C (mesurée par DSC comme pour le polyester semi-cristallin),
- une viscosité à l'état fondu de 5 à 15000 mPa.s mesurée à 200 °C au viscosimètre cône/plateau (connue sous le nom de "viscosité ICI"), selon la norme ASTM D 4287-88.

Le constituant acide du polyester amorphe utilisé dans les compositions thermodurcissables conformes à la présente invention contient de 70 à 100 moles % d'acide isophtalique, les 0 à 30 moles % d'acides restantes étant constituées d'un ou de plusieurs autres acides polycarboxyliques aliphatiques, et/ou cycloaliphatiques et/ou aromatiques tels que l'acide fumarique, l'acide maléique, l'acide téréphtalique, l'acide phtalique, les acides 1,2-, 1,3- ou 1,4-cyclohexanedicarboxyliques, l'acide succinique, l'acide glutarique, l'acide adipique, l'acide pimélique, l'acide subérique, l'acide azélaïque, l'acide sébacique, etc., ou leurs anhydrides correspondants. L'utilisation d'un acide polycarboxylique comportant au moins trois groupes carboxyle ou son anhydride, par exemple l'acide (ou l'anhydride) trimellitique ou l'acide pyromellitique, permet la préparation de polyesters amorphes ramifiés.

Le constituant alcoolique du polyester amorphe utilisé dans les compositions thermodurcissables conformes à la présente invention contient de 70 à 100 moles % de néopentylglycol ou de 2-butyl-2-éthyl-1,3-propanediol, utilisés seuls ou en mélange. Les 0 à 30 moles % des alcools restantes sont constituées d'un ou plusieurs autres polyols aliphatiques et/ou cycloaliphatiques choisi parmi l'éthylène glycol, le diéthylène glycol, le propylène glycol, le 1,4-butanediol, le 1,6-hexanediol, le 1,4-cyclohexanediméthanol, le 2-méthyl-1,3-propanediol, le bisphénol A hydrogéné et l'hydroxypivalate de néopentylglycol.
Pour la préparation de polyesters amorphes ramifiés, on utilise avantageusement des polyols trihydroxylés ou tétrahydroxylés tels que le triméthylolpropane, le ditriméthylolpropane, le triméthyloléthane, le pentaérythritol et leurs mélanges.

Dans les compositions conformes à l'invention, on utilise 5 à 45, de préférence 10 à 30 parties en poids du polyester semi-cristallin contenant des groupes carboxyle, et 55 à 95, de préférence 70 à 90 parties en poids du polyester amorphe contenant des groupes carboxyle, par rapport au poids total de ces polyesters.

Une caractéristique essentielle du polyester semi-cristallin contenant des groupes carboxyle réside dans le fait que le constituant alcoolique comporte au moins 85 moles% de 1,4-cyclohexanediol, et que le constituant acide du polyester comporte au moins 85 moles % d'un acide dicarboxylique aliphatique saturé à chaîne linéaire ayant de 4 à 14 atomes de carbone.

En effet, on a fait la découverte surprenante qu'un polyester semi-cristallin ayant une telle composition, lorsqu'il est utilisé avec un polyester amorphe basé sur une quantité prépondérante d'acide isophtalique comme constituant acide, et avec un agent de réticulation, fournit des compositions thermodurcissables en poudre donnant des enduits de peinture ou de vernis possédant une résistance remarquable aux intempéries. En particulier, la résistance aux intempéries des revêtements obtenus est nettement supérieure à celle des revêtements obtenus avec les compositions préparées à partir des polyesters semi-cristallins de l'état de la technique ne contenant pas de 1,4-cyclohexanediol. Il est même surprenant de constater que cette résistance aux intempéries est supérieure à celle obtenue avec les polyesters amorphes contenant des groupes carboxyle disponibles dans le commerce et utilisés précisément pour leur résistance aux intempéries, tels les polyesters basés sur l'acide isophtalique.

Par ailleurs, les compositions thermodurcissables en poudre conformes à l'invention conservent tous les avantages énumérés ci-dessus des compositions contenant des polyesters semi-cristallins: une excellente stabilite à l'entreposage et la production d'enduits avec obtention d'une surface d'aspect lisse, présentant un brillant élevé et d'excellentes propriétes mécaniques, qui se conservent au cours du temps. Il est évident que dans l'industrie des peintures en poudre, l'excellente résistance aux intempéries, combinée avec les excellentes propriétés mécaniques conférées par l'emploi des compositions conformes à l'invention sont des atouts commerciaux importants.

Le polyester semi-cristallin contenant des groupes carboxyle et le polyester amorphe contenant des groupes carboxyle sont préparés selon les méthodes conventionnelles de synthèse des polyesters par estérification en un ou plusieurs stades. De préférence, on réalise la synthèse du polyester semi-cristallin en un seul stade. Le polyester amorphe peut être synthétisé en un ou en deux stades, selon les monomères utilisés.

Pour la préparation des polyesters, on utilise en général un réacteur classique muni d'un agitateur, d'une entrée de gaz inerte (azote), d'une colonne de distillation reliée à un condenseur refroidi à l'eau et d'un thermomètre connecté à un thermorégulateur.

Les conditions d'estérification utilisées pour la préparation des polyesters sont classiques, à savoir que l'on peut utiliser un catalyseur d'estérification usuel dérivé de l'étain, tel que l'oxyde de dibutylétain, le dilaurate de dibutylétain, le trioctoate de n-butylétain ou dérivé du titane, tel que le titanate de tétrabutyle, à raison de 0 à 1% en poids des réactifs, et ajouter éventuellement des antioxydants tel que le composé phénolique IRGANOX 1010 (CIBA-GEIGY) ou des stabilisants de type phosphonite et phosphite tel que le phosphite de tributyle, à raison de 0 à 1% en poids des réactifs.

La polyestérification est généralement effectuée à une température que l'on augmente progressivement de 130°C à environ 180 à 250°C, d'abord sous pression normale, puis sous pression réduite, en maintenant ces conditions opératoires jusqu'à obtention d'un polyester présentant l'indice d'acide désiré. Le degré d'estérification est suivi par détermination de la quantité d'eau formée au cours de la réaction et des propriétés du polyester obtenu, par exemple l'indice d'acide, le poids moléculaire ou la viscosité.

Lorsque la polyestérification est terminée, on ajoute éventuellement au polyester encore à l'état fondu des catalyseurs de réticulation jusqu'à 1,5 % en poids des polyesters, dans le but d'accélérer la réticulation de la composition thermodurcissable en poudre lors de sa cuisson.

On utilisera généralement comme catalyseur des dérivés aminés tels que la 2-phénylimidazoline, des phosphines telles que la triphénylphosphine, des sels d'ammonium quaternaires tels que le chlorure de tétrapropylammonium ou le bromure de tétrabutylammonium, ou des sels de phosphonium tels que le bromure d'éthyltriphénylphosphonium ou le chlorure de benzyltriphénylphosphonium.

Les polyesters semi-cristallins contenant des groupes carboxyle et les polyesters amorphes contenant des groupes carboxyle décrits ci-dessus sont destinés à servir principalement comme liants, conjointement avec des agents de réticulation, dans la préparation de compositions thermodurcissables en poudre utilisables notamment comme vernis et peintures se prêtant à une application suivant la technique de dépôt au moyen d'un pistolet pulvérisateur électrostatique ou tribo-électrique ou suivant la technique de dépôt en lit fluidisé.

C'est pourquoi, la présente invention se rapporte également à l'utilisation des compositions thermodurcissables en poudre conformes à l'invention pour la préparation de vernis et peintures en poudre, ainsi qu'aux vernis et peintures en poudre obtenus à l'aide de ces compositions.

Enfin, elle se rapporte également à un procédé de revêtement d'un article, de préférence métallique, qui est caractérisé par l'application sur ledit article d'une composition thermodurcissable en poudre conforme à l'invention par dépôt par pulvérisation au pistolet électrostatique ou tribo-électrique ou par dépôt en lit fluidisé suivie d'une cuisson du revêtement ainsi obtenu à une température de 150 à 220°C pendant une durée d'environ 5 à 35 minutes.

L'agent de réticulation utilisé pour la préparation des compositions thermodurcissables en poudre conformes à l'invention est choisi parmi les composés contenant des groupes fonctionnels capables de réagir avec les groupes carboxyle des polyesters. Parmi ces composés, on utilise comme agents de réticulation:
- des composés polyépoxydés solides à la température ordinaire et qui contiennent au moins deux groupes époxy par molécule, comme par exemple l'isocyanurate de triglycidyle (comme celui commercialisé sous le nom d'Araldite PT 810 par la société CIBA-GEIGY), ou la résine époxydée Araldite PT 910 (de la même société).
- des β-hydroxyalkylamides qui renferment au moins un, de préférence deux groupements bis(β-hydroxyalkyl)amide par exemple ceux cités dans la demande de brevet international PCT WO 91/14745 et répondant à la formule générale 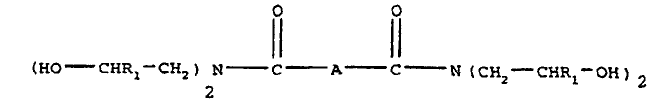
dans laquelle R₁ est H ou un radical alkyle contenant 1 à 4 atomes de carbone, et
A représente un groupement alkylène ou aralkylène contenant 2 à 20 atomes de carbone,
par exemple le N,N,N',N'-tétrakis(2-hydroxyéthyl)adipamide (Primid XL 552 de la société EMS).
- des copolymères acryliques contenant des groupes glycidyle obtenus à partir de méthacrylate de glycidyle et/ou d'acrylate de glycidyle et d'un monomère (méth)acrylique et éventuellement d'un monomère éthyléniquement mono-insaturé différent du (méth)acrylate de glycidyle et du monomère (méth)acrylique. Un exemple de ce type de copolymère acrylique est le GMA252 commercialisé par la société ESTRON CHEMICAL Inc.

L'agent de réticulation décrit ci-dessus est utilisé à raison de 0,25 à 1,4, de préférence de 0,6 à 1,05 équivalent de groupes carboxyle existants dans le polyester semi-cristallin et le polyester amorphe, par équivalent de groupes époxy ou β-hydroxyalkyle.

Les compositions thermodurcissables en poudre conformes à l'invention peuvent par exemple contenir de 5 à 38,4 parties en poids de polyester semi-cristallin, de 30 à 86,4 parties en poids de polyester amorphe et de 4 à 50 parties en poids d'agent de réticulation par rapport au poids total des polyesters et de l'agent de réticulation.

Les compositions thermodurcissables en poudre conformes à l'invention peuvent également contenir diverses substances auxiliaires utilisées conventionnellement dans la fabrication de peintures et vernis en poudre.

Les substances auxiliaires ajoutées éventuellement aux compositions thermodurcissables conformes à l'invention sont entre autres des composés absorbants les rayons ultraviolets comme le Tinuvin 900 (de CIBA-GEIGY Corp.), des stabilisants à la lumière à base d'amines à empêchement stérique (par exemple le Tinuvin 144 de CIBA-GEIGY Corp.), d'autres stabilisants comme les Tinuvin 312 et 1130 (de CIBA-GEIGY) des antioxydants (par exemple l'Irganox 1010, de CIBA-GEIGY) et des stabilisants de type phosphonite ou phosphite (par exemple l'Irgafos P-EPQ de CIBA-GEIGY). Les compositions conformes à l'invention peuvent en contenir jusqu'à 10% en poids par rapport au poids des polyesters. Une variété de pigments et de charges minérales peut également être ajoutée aux compositions thermodurcissables conformes à l'invention. A titre d'exemples de pigments et de charges on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc. On citera encore comme substances auxiliaires des agents régulateurs de fluidité comme le Resiflow PV5 (de WORLEE) ou le Modaflow (de MONSANTO),ou l'Acronal 4F (de BASF), des plastifiants comme le phtalate de dicyclohexyle, le phosphate de triphényle, des agents auxiliaires de broyage, des huiles siccatives et des agents de dégazage tels que la benzoïne. Ces substances auxiliaires sont utilisées en quantités usuelles, étant entendu que si les compositions thermodurcissables conforme à l'invention sont utilisées comme vernis, on omettra l'addition de substances auxiliaires ayant des propriétés opacifiantes.

Pour la préparation des compositions thermodurcissables en poudre, on mélange à sec le polyester semi-cristallin, le polyester amorphe, l'agent de réticulation et les diverses substances auxiliaires utilisées conventionnellement pour la fabrication de peintures et vernis en poudre, par exemple dans un mélangeur à tambour. On homogénéise ensuite ce mélange à une température située dans l'intervalle de 80 à 150°C dans une extrudeuse, par exemple une extrudeuse à vis unique Buss-Ko-Kneder ou une extrudeuse à double vis de type Prism ou A.P.V. Ensuite, on laisse refroidir l'extrudat, on le broie, éventuellement cryogéniquement au moyen d'azote liquide, et on le tamise pour obtenir une poudre dont la dimension des particules est comprise entre 10 et 150 micromètres.

Au lieu de la méthode ci-dessus, on peut également mélanger le polyester semi-cristallin, le polyester amorphe, l'agent de réticulation et les substances auxiliaires dans un solvant tel que le dichlorométhane, broyer pour obtenir une suspension homogène et évaporer ensuite le solvant par exemple par pulvérisation à sec ("spray drying") à une température d'environ 50°C, selon des méthodes connues en soi.

Les peintures et vernis en poudre ainsi obtenus conviennent parfaitement pour une application sur l'article à revêtir par les techniques traditionnelles, c'est-à-dire par la technique bien connue du dépôt en lit fluidisé ou par application au pistolet pulvérisateur électrostatique ou tribo-électrique. Dans ce dernier cas on ajoute des additifs connus pour augmenter la prise de charge dans les systèmes tribo-éleccriques.

Après avoir été appliqués sur l'article concerné, les revêtements déposés sont durcis par cuisson au four à une température de 150 à 220°C pendant une durée d'environ 5 à 35 minutes en vue d'obtenir la réticulation complète du revêtement.

Les exemples qui vont suivre illustrent l'invention sans la limiter.

Sauf indication contraire, les parties citées dans les exemples sont des parties en poids.

### Exemple 1

### Synthèse d'un polyester amorphe contenant des groupes carboxyle en un stade.

Dans un ballon à quatre cols équipé d'un agitateur, d'une colonne de distillation reliée à un condenseur refroidi à l'eau, d'un tube d'admission d'azote et d'un thermomètre connecté à un thermorégulateur, on introduit 400,6 parties de néopentylglycol et 22,3 parties de triméthylolpropane. Le contenu du ballon est chauffé jusqu'à environ 130°C, sous agitation et sous courant d'azote, et on y ajoute alors 724,7 parties d'acide isophtalique et 2,5 parties de trioctoate de n-butylétain comme catalyseur. On chauffe le mélange en atmosphère d'azote et sous agitation jusqu'à une température d'environ 230°C; l'eau formée commence à distiller vers 180°C. Lorsque la distillation sous la pression atmosphérique s'arrête, on établit progressivement un vide de 50 mm Hg.

Après trois heures de chauffage à 230°C et sous 50 mm Hg, on refroidit le mélange à 180°C, puis l'on vide le ballon alors que le polyester est encore à l'état fondu et on laisse refroidir. Le polyester amorphe contenant des groupes carboxyle ainsi obtenu présente les caractéristiques suivantes:

| | |
|---|---|
| indice d'acide | 32 mg de KOH/g |
| indice d'hydroxyle | 2 mg de KOH/g |
| viscosité ICI à 200°C | 8.000 mPa.s |
| Tg (DSC, 20°C/min) (déterminée par calorimétrie à balayage différentiel (ou DSC), avec une vitesse de chauffage de 20°C par minute). | 59°C |

### Exemple 2

### Synthèse d'un polyester amorphe contenant des groupes carboxyle en deux stades.

Selon le mode opératoire de l'exemple 1, on fait réagir 400,5 parties de néopentylglycol, 22,3 parties de triméthylolpropane, 468,5 parties d'acide isophtalique, 145,0 parties d'acide téréphtalique et 2,4 parties de trioctoate de n-butylétain comme catalyseur. Le polyester contenant des groupes hydroxyle ainsi obtenu présente un indice d'hydroxyle de 59 mg de KOH/g, un indice d'acide de 12 mg de KOK/g et une viscosité ICI à 200 °C de 2.200 mPa.s.

On refroidit le polyester contenant des groupes hydroxyle obtenu au premier stade jusqu'à 200°C, on y ajoute 111,3 parties d'acide isophtalique et on chauffe le mélange à 230°C. Après 2 heures à cette température, et lorsque le mélange réactionnel est transparent, on établit progressivement un vide de 50 mm Hg et on poursuit pendant 3 heures le chauffage sous vide et à la même température. Le polyester amorphe contenant des groupes carboxyle obtenu présente les caractéristiques suivantes :

| | |
|---|---|
| indice d'acide | 31 mg de KOH/g |
| indice d'hydroxyle | 3 mg de KOH/g |
| viscosité ICI à 200°C | 8.600 mPa.s |
| Tg (DSC; 20°C/min) | 61°C |

### Exemple 3.a.

### Synthèse d'un polyester semi-cristallin contenant des groupes carboxyle en un stade.

Dans le même réacteur qu'à l'exemple 1, on place un mélange de 500,0 parties de 1,4-cyclohexanediol, 655,1 parties d'acide adipique et 2,5 parties de trioctoate de n-butylétain. On chauffe le mélange réactionnel, sous agitation et sous azote, jusqu'à une température d'environ 140°C, à laquelle l'eau de réaction commence à distiller. On continue graduellement le chauffage jusqu'à la température de 220°C. Lorsque la distillation sous pression atmosphérique s'arrête, on ajoute 1,0 partie de phosphite de tributyle et 1,0 partie de trioctoate de n-butylétain au mélange réactionnel, que l'on place sous un vide de 50 mm Hg. Après cinq heures sous cette pression et à 220°C, le polyester obtenu présente les caractéristiques suivantes :

| | |
|---|---|
| indice d'acide | 23,5 mg de KOH/g |
| indice d'hydroxyle | 2,5 mg de KOH/g |
| viscosité ICI à 175°C | 3.600 mPa.s |
| viscosité ICI à 150°C | 8.000 mPa.s |
| Tg (DSC, 20°C/min) | 40°C |
| température de fusion (DSC, 20°C/min) | 90 à 130°C |

Le polyester semi-cristallin contenant des groupes carboxyle est refroidi à 160°C et on y ajoute 5 parties de Tinuvin 144, 10 parties de Tinuvin 1130 et 10 parties de Tinuvin 312. Après une heure d'agitation, on récupère le polyester contenu dans le ballon.

### Exemple 3.b.

### Synthèse d'un polyester semi-cristallin contenant des groupes carboxyle en un stade.

Dans le même réacteur qu'à l'exemple 1, on place un mélange de 400,2 parties de 1,4-cyclohexanediol, 133,4 parties de bisphénol A hydrogéné, 610,6 parties d'acide adipique et 2,5 parties de trioctoate de n-butylétain. On chauffe le mélange réactionnel, sous agitation et sous azote, jusqu'à une température d'environ 140°C, à laquelle l'eau de réaction commence à distiller. On continue graduellement le chauffage jusqu'a la température de 220°C. Lorsque la distillation sous pression atmospherique s'arrête, on ajoute 1,0 partie de phosphite de tributyle et 1,0 partie de trioctoate de n-butylétain au mélange réactionnel, que l'on place sous un vide de 50 mm Hg. Après cinq heures sous cette pression et à 220 °C, le polyester obtenu présente les caractéristiques suivantes:

| | |
|---|---|
| indice d'acide | 21,4 mg de KOH/g |
| indice d'hydroxyle | 2,8 mg de KOH/g |
| viscosité ICI a 175°C | 4.300 mPa.s |
| Tg (DSC, 20°C/min) | 42°C |
| température de fusion (DSC, 20°C/min) | 95 à 115°C |

Le polyester semi-cristallin contenant des groupes carboxyle est refroidi à 160°C et on y ajoute 10 parties de Tinuvin 144 et 20 parties de Tinuvin 900. Après une heure d'agitation, on récupère le polyester contenu dans le ballon.

### Exemples 4 à 9.

### Synthèse de polyesters amorphes et de polyesters semi-cristallins contenant des groupes carboxyle.

On a préparé 6 autres polyesters amorphes ou semi-cristallins. Les polyesters amorphes des exemples 4 à 7 ont été préparés selon le mode opératoire de l'exemple 1 et les polyesters semi-cristallins des exemples 8 et 9 ont été préparés selon le mode opératoire de l'exemple 3.a. Le tableau I ci-dessous indique la nature et les quantités des matières de départ utilisées, l'indice d'acide (I_{AC}), l'indice d'hydroxyle (I_{OH}), la viscosité ICI à la température indiquée, la température de transition vitreuse (Tg) mesurée par calorimétrie à balayage différentiel (ou DSC, 20°C/min) et la température de fusion (Tm), également mesurée par calorimétrie à balayage différentiel (DSC, 20°C/min).

Dans le tableau I, les différents composés utilisés pour la préparation des polyesters sont désignés par les abréviations suivantes :

| | |
|---|---|
| CHDO | 1,4-cyclohexanediol |
| TMP | triméthylolpropane |
| NPG | néopentylglycol |
| BEPD | 2-butyl-2-éthyl-1,3-propanediol |
| HPN | hydroxypivalate de néopentylglycol |
| AAd | acide adipique |
| AIP | acide isophtalique |

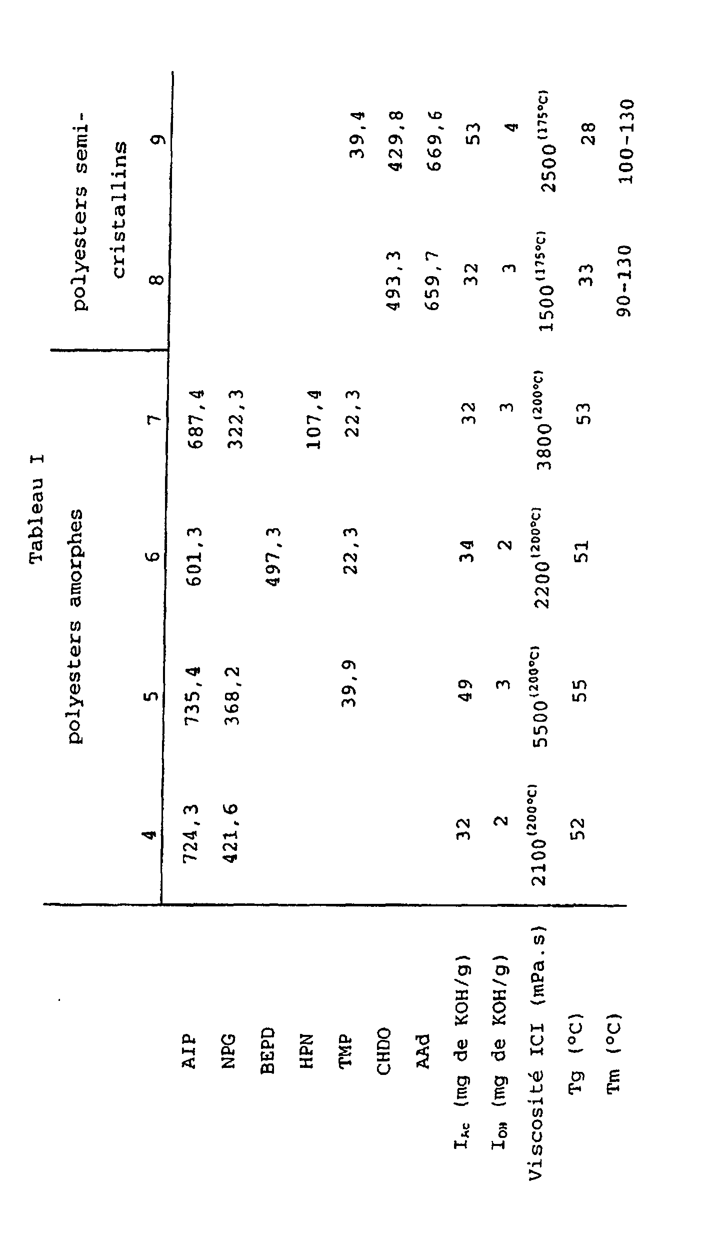

### Exemple 10 (comparatif)

### synthèse d'un polyester amorphe contenant des groupes carboxyle, en deux stades.

On place dans le même réacteur qu'à l'exemple 1, 421,6 parties de néopentylglycol, que l'on porte à la température de 130°C. On ajoute alors au réacteur 606,1 parties d'acide téréphtalique et 2,5 parties de trioctoate de n-butylétain. On poursuit la réaction à 240°C, sous pression atmosphérique, jusqu'au moment où 95% de la quantité théorique d'eau de réaction a distillé, et où le polyester obtenu est transparent. On obtient ainsi un polyester contenant des groupes hydroxyle qui présente les caractéristiques suivantes:

| | |
|---|---|
| indice d'acide | 8 mg KOH/g |
| indice d'hydroxyle | 61 mg KOH/g |
| viscosité ICI à 200°C | 1.200 mPa.s |

Au polyester obtenu au premier stade, se trouvant à 200°C, on ajoute 118,3 parties d'acide isophtalique. On chauffe ensuite le mélange réactionnel à 230°C, et on le maintient à 240°C pendant trois heures. Quand le mélange réactionnel est transparent, on le place sous un vide de 50 mm Hg, et on le maintient à 240°C pendant quatre heures sous cette pression. On obtient ainsi un polyester amorphe contenant des groupes carboxyle qui présente les caractéristiques suivantes:

| | |
|---|---|
| indice d'acide | 33 mg KOH/g |
| indice d'hydroxyle | 3 mg KOH/g |
| viscosité ICI à 200°C | 4.700mPa.s |
| Tg (DSC; 20°C/min) | 57°C |

Le polyester est refroidi à 200°C et on y ajoute 1,3 parties de bromure d'éthyltriphénylphosphonium. Après une heure d'agitation, le polyester est récupéré.

Ce polyester amorphe contenant des groupes carboxyle, utilisé à titre comparatif, est bien connu dans l'état de la technique. Sur l'ensemble des acides qui le constituent, il contient une majorité d'acide téréphtalique et une minorité d'acide isophtalique; à l'inverse, les polyesters amorphes contenant des groupes carboxyle utilisés dans les compositions thermodurcissables en poudre selon la présente invention, contiennent une majorité d'acide isophtalique (au moins 70 moles% par rapport au total des acides).

### Exemple 11 (comparatif)

### Synthèse d'un polyester semi-cristallin contenant des groupes carboxyle, en deux stades.

Dans le même réacteur qu'à l'exemple 1, on charge 459,4 parties de 1,6-hexanediol que l'on chauffe à 150°C. On ajoute alors 579,5 parties d'acide téréphtalique et 2,5 parties de trioctoate de n-butylétain. On poursuit la réaction à 235°C, sous pression atmosphérique, jusqu'à ce que 95% de la quantité théorique d'eau de réaction a été distillée. On obtient ainsi un polyester contenant des groupes hydroxyle qui présente les caractéristiques suivantes :

| | |
|---|---|
| indice d'acide | 5 mg KOH/g |
| indice d'hydroxyle | 53 mg KOH/g |
| viscosité ICI à 176°C | 800 mPa.s |

Au polyester obtenu au premier stade maintenu à 200°C, on ajoute 101,3 parties d'acide adipique. On chauffe alors le mélange réactionnel à 235°C. Après deux heures à cette température, ou ajoute 1,0 partie de phosphite de tributyle au mélange réactionnel, et on place ce dernier sous un vide de 50 mm Hg. Deux heures plus tard à la même température, on obtient un polyester semi-cristallin contenant des groupes carboxyle qui présente les caractéristiques suivantes :

| | |
|---|---|
| indice d'acide | 32 mg KOH/g |
| indice d'hydroxyle | 0,5 mg KOH/g |
| viscosité ICI à 200°C | 1.500 mPa.s |
| Tg (DSC; 20°C/min) | 28°C |
| Tm (DSC; 20°C/min) | 131°C |

Le polyester est refroidi à 160°C, et on y ajoute 5 parties de Tinuvin 144, 10 parties de Tinuvin 1130 et 10 parties de Tinuvin 312. Après une heure sous agitation, le polyester est isolé.

Ce polyester semi-cristallin contenant des groupes carboxyle, utilisé à titre de comparaison, est connu dans l'état de la technique, par exemple par la demande de brevet PCT WO 91/14745. Contrairement aux polyesters cristallins utilisés dans les compositions thermodurcissables en poudre selon la présente invention, où le diol mis en oeuvre en quantité largement prépondérante est le 1,4-cyclohexanediol, les polyesters semi-cristallins décrits dans cette demande de brevet ne contiennent pas ce dernier composé.

### Exemple 12 (comparatif)

### Synthèse d'un polyester semi-cristallin contenant des groupes carboxyle, en 1 stade.

On répète exactement l'exemple 3.a., mais on remplace les 500,0 parties de 1,4-cyclohexanediol par 552,3 parties de 1,4-cyclohexanediméthanol, et on utilise 587,7 parties d'acide adipique au lieu de 655,1 parties.

A la fin de la condensation, on ajoute les mêmes quantités des mêmes Tinuvin qu'à l'exemple 3.a.

On obtient un polyester semi-cristallin qui présente les caractéristiques suivantes:

| | |
|---|---|
| indice d'acide | 23,0 mg KOH/g |
| indice d'hydroxyle | 3 mg KOH/g |
| viscosité ICI à 175°C | 1.600 mPa.s |
| Tg (DSC; 20°C/min) | 40°C |
| température de fusion (DSC; 20°C/min) | 80 à 100°C |

### Exemple 13 (comparatif)

### Synthèse d'un polyester semi-cristallin contenant des groupes carboxyle, en un stade.

Dans le même réacteur qu'à l'exemple 1, on introduit 386,1 parties de 1,4-butanediol et l'on chauffe jusqu'à environ 130°C, sous agitation et sous courant d'azote. Puis, on ajoute 768,3 parties d'acide 1,4-cyclohexanedicarboxylique et 2,5 parties de trioctoate de n-butylétain. On chauffe graduellement le mélange jusqu'à la température de 220°C.

Lorsque la distillation sous pression atmosphérique s'arrête, on ajoute 1,0 partie de phosphite de tributyle et l'on place sous un vide de 50 mm Hg. Après quatre heures sous cette pression et à 220°C, le polyester obtenu présente les caractéristiques suivantes:

| | |
|---|---|
| indice d'acide | 21,0 mg KOH/g |
| indice d'hydroxyle | 3 mg KOH/g |
| viscosité ICI à 175°C | 2.400 mPa.s |
| Tg (DSC; 20°C/min) | - 10°C |
| température de fusion (DSC; 20°C/min) | 35 à 45°C |

Le polyester semi-cristallin contenant des groupes carboxyle est refroidi et on y ajoute les mêmes quantités des mêmes Tinuvin qu'à l'exemple 3.a.

### Exemple 14.

### Préparation de compositions thermodurcissables en poudre.

A partir des polyesters obtenus dans les exemples 1 à 13, on prépare une série de poudres utilisables pour la fabrication de revêtements, selon les deux formulations différentes suivantes, l'une de couleur blanche (RAL 9010) (formulation A) et l'autre de couleur brun foncé (RAL 8014) (formulation B):

| | | |
|---|---|---|
| A) | Liant | 600,0 parties |
| | Dioxyde de titane (1) | 300,0 parties |
| | Blanc Fix F (2) | 100,0 parties |
| | Agent régulateur de fluidité (3) | 10,0 parties |
| | Benzoïne | 3,5 parties |
| B) | Liant | 804,0 parties |
| | Bayferrox 130 (4) | 45,0 parties |
| | Bayferrox 3950 (4) | 140,0 parties |
| | FW 2 (5) | 11,0 parties |
| | Agent régulateur de fluidité (3) | 10,0 parties |
| | Benzoïne | 3,5 parties |
| (1) Kronos 2310 (KRONOS) | | |
| (2) (SACHTLEBEN) | | |
| (3) Resiflow PV5 (WORLEE) | | |
| (4) (BAYER) | | |
| (5) (DEGUSSA) | | |

Le liant de ces formulations contient toujours l'agent de réticulation, ainsi que, soit un mélange de polyester amorphe et de polyester semi-cristallin selon l'invention (compositions 14 à 26), soit, pour comparaison, un polyester amorphe seul ou en mélange avec un polyester semi-cristallin comparatif (compositions 27 à 36), comme indiqué dans le tableau II.

L'agent de réticulation est l'isocyanurate de triglycidyle pour les compositions 14 à 24 et 27 à 36, tandis qu'on utilise un β-hydroxyalkylamide pour la composition 25 et un composé époxydé pour la composition 26.

Pour la préparation des compositions en poudre contenant un polyester amorphe et un polyester semi-cristallin, on mélange d'abord les deux polyesters, soit à l'état fondu dans un ballon conventionnel jusqu'à ce que le mélange soit homogène, soit en utilisant une extrudeuse, par exemple du type Betol BTS 40 (de la société EIS Group P.L.C.).

Ensuite, on prépare les poudres en mélangeant à sec le mélange des polyesters (ou le polyester seul pour les compositions comparatives 27, 28, 31 et 32) et l'agent de réticulation avec les diverses substances auxiliaires utilisées conventionnellement pour la fabrication des peintures et vernis en poudre. Le mélange est homogénéisé et extrudé à la température de 85°C dans une extrudeuse à double vis, du type Prism 16 mm L/D 15/1 (de la société PRISM). L'extrudat est refroidi et broyé dans un broyeur tel que le Retsch ZM1 (de la société RETSCH). Pour terminer, la poudre est tamisée pour obtenir une dimension des particules comprise encre 10 et 110 micromètres.

Les differentes compositions thermodurcissables en poudre ainsi préparées sont reprises dans le tableau II.

Dans ce tableau.
- la 1ère: colonne donne le numéro de la composition préparée,
- la 2ème: colonne le type de formulation A ou B utilisé,
- la 3ème: colonne le numero de l'exemple de préparation du polyester amorphe contenant des groupes carboxyle utilisé dans la composition préparée,
- la 4ème: colonne la quantité utilisée du polyester repris à la 3ème colonne, en parties en poids,
- la 5ème: colonne le numéro de l'exemple de préparation du polyester semi-cristallin contenant des groupes carboxyle utilisé dans la composition préparée,
- la 6ème: colonne la quantité utilisée du polyester semi-cristallin repris à la 5ème colonne, en parties en poids,
- la 7ème: colonne la quantité de bromure d'éthyltriphénylphosphonium éventuellement utilisée comme accélérateur, en parties en poids,
- la 8ème: colonne la quantité d'agent de réticulation utilisée, en parties en poids.

**Tableau II**

| n° | Type de formulation | Polyester amorphe | | Polyester semicristallin | | Accélérateur | Agent de réticulation |
|---|---|---|---|---|---|---|---|
| | | Ex. n° | Quantité | Ex. n° | Quantité | | |
| 14 | A | 1 | 390,6 | 8 | 167,4 | - | 42,0(2) |
| 15 | A | 1 | 448,8 | 3a | 112,2 | - | 39,0(2) |
| 16 | A | 1 | 456,1 | 3a | 104 | 1,0 | 39,0(2) |
| 17 | A | 2 | 446,4 | 8 | 110,2 | 1,4 | 42,0(2) |
| 18 | A | 4 | 446,4 | 8 | 110,2 | 1,4 | 42,0(2) |
| 19 | A | 5 | 434,9 | 8 | 108,7 | - | 56,4(2) |
| 20a | A | 5 | 437,8 | 3a | 109,4 | - | 52,8(2) |
| 20b | A | 5 | 465,1 | 3b | 82,1 | - | 52,8(2) |
| 21 | A | 5 | 432,0 | 9 | 108,0 | - | 60,0(2) |
| 22 | A | 6 | 448,8 | 3a | 112,2 | - | 39,0(2) |
| 23 | A | 7 | 476,1 | 3a | 84,0 | - | 39,0(2) |
| 24 | B | 1 | 523,4 | 3a | 224,3 | 1,0 | 56,3(2) |
| 25 | B | 1 | 645,2 | 3a | 113,8 | - | 45,0(3) |
| 26 | B | 1 | 623,9 | 3a | 110,1 | - | 70,0(4) |
| 27(1) | A | 10 | 558,8 | - | - | - | 42,0(2) |
| 28(1) | B | 10 | 747,7 | - | - | - | 56,3(2) |
| 29(1) | B | 1 | 523,4 | 11 | 224,3 | - | 56,3(2) |
| 30(1) | B | 1 | 635,6 | 11 | 112,2 | - | 56,3(2) |
| 31(1) | A | 1 | 558,0 | - | - | - | 42,0(2) |
| 32(1) | B | 1 | 747,7 | - | - | - | 56,3(2) |
| 33(1) | A | 1 | 476,1 | 12 | 84 | 1,0 | 39,0(2) |
| 34(1) | A | 1 | 476,1 | 13 | 84 | 1,0 | 39,0(2) |
| 35(1) | B | 1 | 635,6 | 12 | 112,2 | 1,0 | 56,3(2) |
| 36(1) | B | 1 | 635,6 | 13 | 112,2 | 1,0 | 56,3(2) |
| (1) compositions préparées à titre de comparaison (2) isocyanurate de triglycidyle (Araldite PT 810 de la société CIBA-GEIGY) (3) β-hydroxyalkylamide (Primid X2 552 de la société EMS) (4) résine époxydée (Araldite PT 910 de la société CIBA-GEIGY) | | | | | | | |

### Exemple 15.

### Caractéristiques des enduits de peinture.

On applique les poudres, formulées comme décrit à l'exemple 14, au pistolet pulvérisateur électrostatique GEMA-Volstatic PCG1, sous une tension de 60 kV, sur des panneaux en acier laminés à froid, non traités, en une épaisseur de film de 50 à 80 micromètres. Les enduits déposés subissent ensuite une cuisson dans un four ventilé avec de l'air, à la température de 200°C, pendant une durée de 15 minutes. On soumet les revêtements durcis ainsi obtenus aux tests classiques. Les résultats obtenus sont reportés dans le tableau IV.
Dans ce tableau,
- la 1ère: colonne donne le numéro de la composition préparée à l'exemple 14,
- la 2ème: colonne, la valeur du brillant sous un angle de 60°, en %, selon la norme ASTM D523,
- la 3ème: colonne la dureté au crayon au moyen d'un "Scratch Hardness Tester" selon Wolff Wilborn,
- la 4ème: colonne le comportement (flexibilité) du revêtement au pliage sur un mandrin conique de 3 mm, selon la norme ASTM D522,
- la 5ème: colonne la valeur obtenue dans l'essai d'emboutissement Erichsen, selon la norme ISO 1520.
- la 6ème: colonne la valeur de la résistance au choc inverse, en kg.cm, selon la norme ASTM D2794,
- la 7ème: colonne la valeur de la résistance au choc direct, en kg.cm, selon la norme ASTM D2794.

**Tableau III**

| Composition n° | Brillant à 60° (%) | Dureté au crayon | Mandrin conique | Emboutissage Erichsen (mm) | Choc inverse (kg.cm) | Choc direct (kg.cm) |
|---|---|---|---|---|---|---|
| 14 | 86 | 2H | passe | 10,7 | 200 | 200 |
| 15 | 90 | H | passe | 10,1 | 160 | 120 |
| 16 | 90 | H | passe | 10,3 | 180 | 180 |
| 17 | 92 | H | passe | 10,2 | 180 | 180 |
| 18 | 98 | H | passe | 10,4 | 180 | 180 |
| 19 | 85 | 2H | passe | 10,8 | 200 | 200 |
| 20a | 86 | H | passe | 10,5 | 160 | 160 |
| 20b | 92 | 2H | passe | 10,7 | 200 | 200 |
| 21 | 89 | 2H | passe | 10,4 | 180 | 160 |
| 22 | 93 | H | passe | 10,3 | 160 | 140 |
| 23 | 92 | H | passe | 10,5 | 180 | 180 |
| 24 | 93 | H | passe | 10,1 | 160 | 160 |
| 25 | 96 | H | passe | 10,8 | 180 | 200 |
| 26 | 97 | H | passe | 10,2 | 160 | 180 |
| 27(1) | 93 | H | passe | 10,2 | 180 | 180 |
| 28(1) | 91 | H | passe | 10,5 | 200 | 200 |
| 29(1) | 93 | H | passe | 6,2 | <10 | <10 |
| 30(1) | 93 | H | passe | 9,4 | 60 | 40 |
| 31(1) | 92 | H | passe | 5,4 | <10 | <10 |
| 32(1) | 90 | H | passe | 6,8 | <10 | - |
| 33(1) | 94 | H | passe | 7,9 | 0 | 20 |
| 34(1) | 95 | H | passe | 8,3 | 0 | 20 |
| 35(1) | 92 | H | passe | 8,0 | 0 | 20 |
| 36(1) | 96 | H | passe | 8,2 | 0 | 20 |

| | | | | | | |
|---|---|---|---|---|---|---|
| (1) compositions utilisées à titre de comparaison. | | | | | | |

Ces résultats montrent clairement que les compositions en poudre à base d'un mélange de polyesters amorphes et de polyesters semi-cristallins, conformes à l'invention (n° 14 à 26), donnent des enduits de peinture et de vernis qui possèdent des caractéristiques avantageuses, tout-à-fait comparables à celles des enduits correspondants obtenus à partir des compositions de l'état de la technique à base de polyesters amorphes dont la teneur en acide téréphtalique est élevée (n^{os} 27 et 28), les enduits présentant un très bon brillant et d'excellentes propriétés mécaniques.

Par contre, les compositions contenant uniquement un polyester amorphe dont la teneur en acide isophtalique est élevée (n^{os} 31 et 32) procurent des enduits dont les propriétés mécaniques sont médiocres. L'ajout de polyesters semi-cristallins connus dans l'état de la technique à ces polyesters amorphes, dont la teneur en acide isophtalique est élevée, ne permet pas d'atteindre des propriétés mécaniques satisfaisantes (n^{os} 29, 30 et 33 à 36).

### Exemple 16.

### Résistance aux intempéries des enduits de peinture.

Dans cet exemple, on compare la résistance aux intempéries d'enduits de peinture obtenus avec le mélange du polyester amorphe et du polyester semi-cristallin des compositions 24 à 26 conformes à l'invention avec celle d'enduits obtenus avec les compositions non conformes à l'invention 28, 30, 35 et 36.

Les poudres pigmentées formulées comme décrit à l'exemple 14 sont appliquées au pistolet électrostatique sur des panneaux d'aluminium chromaté dans les mêmes conditions qu'à l'exemple 15.

Les enduits ont été soumis à un essai de vieillissement accéléré afin d'en estimer la résistance aux intempéries (test Q-UV).

Les mesures de résistance aux intempéries ont été effectuées dans un environnement très sévère, c'est-à-dire au moyen d'un appareil Q-UV de mesure de vieillissement accéléré (de la Q Panel Co) dans lequel on soumet les enduits à des effets intermittents de condensation (4 heures à 40°C) aussi bien qu'à des effets de détérioration dus à la lumière simulés par des lampes UV fluorescentes (lampes UVA 340 nm; I=0,77 W/m²/nm) pendant 8 heures à 60°C, selon la norme ASTM G53-88. Pour ce type de lampe, on observe une bonne corrélation avec les effets de la lumière solaire naturelle, ce qui n'est pas le cas avec des lampes UVB, émettant principalement à la longueur d'onde de 313 nm.

Dans le tableau IV, on donne pour les enduits de peinture les valeurs du brillant mesurées sous un angle de 60° selon la norme ASTM D523, toutes les 200 heures.

**Tableau IV**

| Variation du brillant à 60° (%) au cours du temps | | | | | | | | |
|---|---|---|---|---|---|---|---|---|
| | numéro de la composition selon l'exemple 14 | | | | | | | |
| Heures | 24 | 25 | 26 | 28 | 30 | 32 | 35 | 36 |
| 000 | 100 | 100 | 100 | 100 | 100 | 100 | 100 | 100 |
| 200 | 100 | 100 | 100 | 99 | 99 | 100 | 99 | 99 |
| 400 | 100 | 100 | 100 | 99 | 99 | 100 | 98 | 98 |
| 600 | 100 | 100 | 100 | 97 | 99 | 99 | 99 | 97 |
| 800 | 100 | 100 | 100 | 96 | 98 | 100 | 98 | 98 |
| 1000 | 100 | 100 | 100 | 95 | 98 | 97 | 98 | 96 |
| 1200 | 100 | 100 | 100 | 95 | 98 | 97 | 97 | 97 |
| 1400 | 100 | 100 | 100 | 87 | 95 | 97 | 95 | 95 |
| 1600 | 100 | 100 | 100 | 80 | 93 | 97 | 90 | 94 |
| 1800 | 100 | 100 | 100 | 78 | 86 | 97 | 85 | 89 |
| 2000 | 100 | 100 | 100 | 74 | 81 | 97 | 81 | 96 |
| 2200 | 100 | 100 | 100 | 60 | 79 | 96 | 77 | 83 |
| 2400 | 100 | 100 | 100 | 42 | 68 | 96 | 66 | 79 |
| 2600 | 100 | 100 | 100 | | 65 | 95 | 63 | 73 |
| 2800 | 100 | 100 | 100 | | 57 | 95 | 62 | 60 |
| 3000 | 100 | 100 | 100 | | 42 | 93 | 55 | 51 |
| 3200 | 100 | 100 | 100 | | | 92 | 40 | 39 |
| 3400 | 100 | 100 | 100 | | | 91 | | |
| 3600 | 100 | 100 | 100 | | | 89 | | |
| 3800 | 99 | 99 | 100 | | | 87 | | |
| 4000 | 100 | 100 | 99 | | | 87 | | |
| 4200 | 98 | 98 | 99 | | | 86 | | |
| 4400 | 98 | 98 | 98 | | | 84 | | |
| 4600 | 97 | 97 | 98 | | | 83 | | |
| 4800 | 97 | 97 | 97 | | | 79 | | |
| 5000 | 96 | 96 | 95 | | | 77 | | |
| 5200 | 96 | 97 | 96 | | | 76 | | |
| 5400 | 95 | 95 | 94 | | | 75 | | |
| 5600 | 95 | 94 | 95 | | | 73 | | |
| 5800 | | | | 94 | 94 | 93 | | 69 |
| 6000 | | | | 94 | 93 | 92 | | 67 |
| 6200 | | | | 92 | 92 | 92 | | 63 |
| 6400 | | | | 90 | 90 | 90 | | 59 |
| 6600 | | | | 90 | 89 | 88 | | 58 |
| 6800 | | | | 88 | 88 | 87 | | 54 |
| 7000 | | | | 88 | 87 | 87 | | 50 |
| 7200 | | | | 87 | 86 | 85 | | 49 |
| 7400 | | | | 86 | 86 | 85 | | 48 |
| 7600 | | | | 85 | 85 | 84 | | |
| 7800 | | | | 84 | 83 | 84 | | |
| 8000 | | | | 82 | 83 | 82 | | |
| 8200 | | | | 80 | 79 | 79 | | |
| 8400 | | | | 79 | 79 | 77 | | |
| 8600 | | | | 79 | 78 | 77 | | |
| 8800 | | | | 78 | 76 | 74 | | |
| 9000 | | | | 76 | 75 | 74 | | |
| 9200 | | | | 75 | 75 | 72 | | |
| 9400 | | | | 74 | 74 | 72 | | |
| 9600 | | | | 70 | 71 | 69 | | |
| 9800 | | | | 69 | 70 | 69 | | |
| 10000 | | | | 68 | 67 | 67 | | |
| 10200 | | | | 65 | 66 | 66 | | |
| 10400 | | | | 62 | 64 | 63 | | |
| 10600 | | | | 60 | 61 | 59 | | |
| 10800 | | | | 59 | 60 | 58 | | |
| 11000 | | | | 58 | 57 | 54 | | |
| 11200 | | | | 55 | 55 | 50 | | |
| 11400 | | | | 53 | 51 | 48 | | |
| 11600 | | | | 50 | 46 | 44 | | |
| 11800 | | | | 49 | 40 | 39 | | |
| 12000 | | | | 47 | 37 | 35 | | |

Les résultats du tableau IV montrent que les compositions conformes à l'invention, à base d'un mélange d'un polyester amorphe à teneur élevée en acide isophtalique et d'un polyester semi-cristallin, qui renferme une quantité prépondérante de 1,4-cyclohexanediol comme constituant alcoolique, fournissent des enduits qui résistent remarquablement bien au cours du temps, contrairement aux compositions à base de polyesters de l'état de la technique.

Ainsi, on voit que les enduits préparés avec les compositions 24 à 26 conservent près de 100% du brillant après 4.000 heures, et même encore 50% après 11200 à 11600 heures.

Par contre, pour les enduits préparés avec les compositions de l'état de la technique, le brillant initial décroît beaucoup plus rapidement au cours du temps.

Ainsi, le brillant initial de l'enduit préparé avec la composition 32 n'est plus que de 50% après 7000 heures seulement. Or, il s'agit d'un polyester amorphe dont la teneur en acide isophtalique est élevée, qui est très prisé pour ses performances en exposition à l'extérieur.

Les résultats sont encore plus mauvais avec la composition 28, qui contient un polyester amorphe à teneur élevée en acide téréphtalique: le brillant n'est plus que de 50 % de sa valeur initiale après a peine environ 2300 heures.

On constate également que l'ajout, à un polyester amorphe à teneur élevée en acide isophtalique, de polyesters semi-cristallins de l'état de la technique, détériore les propriétés de résistance aux intempéries de ce polyester amorphe. Il en est ainsi des compositions 30, 35 et 36. L'enduit obtenu avec la composition 30, qui contient le polyester semi-cristallin de l'exemple 11, basé essentiellement sur de l'acide téréphtalique. en mélange avec le polyester amorphe à teneur élevée en acide isophtalique de l'exemple 1, voit son brillant se réduire à 50 % de sa valeur initiale déjà après 2900 heures. Quant aux enduits obtenus avec les compositions 35 et 36, qui contiennent, à côté du polyester amorphe de l'exemple 1, les polyesters semi-cristallins entièrement aliphatiques des exemples 12 et 13 respectivement, ils perdent 50 % de leur brillant initial après environ 3000 heures. On voit donc que l'ajout à un polyester amorphe à teneur élevée en acide isophtalique, d'un polyester semi-cristallin à teneur élevée en 1,4-cyclohexanediol, procure des compositions fournissant des enduits qui présentent à la fois une résistance aux intempéries tout-à-fait remarquable, et des propriétés mécaniques excellentes, qui se conservent au cours du temps.

## Revendications

1. Compositions thermodurcissables en poudre comprenant comme liant un mélange de polyesters contenant des groupes carboxyle et d'un agent de réticulation ayant des groupes fonctionnels capables de réagir avec les groupes carboxyle, **caractérisé en ce que** les polyesters comprennent
(a) un polyester semi-cristallin contenant des groupes carboxyle, constitué, par rapport au total des alcools, de 85 à 100 moles% de 1,4-cyclohexanediol et de 0 à 15 moles% d'au moins un autre polyol aliphatique et/ou cycloaliphatique, et, par rapport au total des acides, de 85 à 100 moles% d'un acide aliphatique dicarboxylique saturé à chaîne linéaire ayant de 4 à 14 atomes de carbone et de 0 à 15 moles% d'au moins un autre acide polycarboxylique aliphatique, et/ou cycloaliphatique et/ou aromatique, et
(b) un polyester amorphe contenant des groupes carboxyle constitué, par rapport au total des acides, de 70 à 100 moles% d'acide isophtalique et de 0 à 30 moles% d'au moins un autre acide polycarboxylique aliphatique et/ou cycloaliphatique et/ou aromatique, et, par rapport au total des alcools, de 70 à 100 moles% de néopentylglycol et/ou de 2-butyl-2-éthyl-1,3-propanediol et de 0 à 30 moles% d'au moins un autre polyol aliphatique et/ou cycloaliphatique.

2. Compositions selon la revendication 1, **caractérisées en ce que** l'acide dicarboxylique aliphatique saturé à chaîne linéaire entrant dans la composition du polyester semi-cristallin (a) est choisi parmi l'acide succinique, l'acide glutarique, l'acide adipique, l'acide pimélique, l'acide subérique, l'acide azélaïque, l'acide sébacique et leurs anhydrides, seuls ou en mélange, et de préférence l'acide adipique.

3. Compositions selon l'une quelconque des revendications 1 ou 2, **caractérisées en ce que** l'acide polycarboxylique entrant dans la composition du polyester semi-cristallin (a) est choisi parmi l'acide 1,4-cyclohexanedicarboxylique, l'acide fumarique, l'acide maléique, l'acide trimellitique, l'acide pyromellitique et leurs anhydrides, seuls ou en mélange.

4. Compositions selon l'une quelconque des revendications 1 à 3, **caractérisées en ce que** le polyol entrant dans la composition du polyester semi-cristallin (a) est choisi parmi l'échylène glycol, le propylène glycol, le 1,4-butanediol, le 1,6-hexanediol, le 1,4-cyclohexanediméthanol, le bisphénol A hydrogéné, le triméthylolpropane, le ditriméthylolpropane, le triméthyloléthane, le pentaérythritol et leurs mélanges.

5. Compositions selon l'une quelconque des revendications 1 à 4, **caractérisées en ce que** le polyester semi-cristallin (a) présente un indice d'acide de 10 à 70 mg de KOH/g, et de préférence, entre 15 et 40 mg de KOH/g.

6. Compositions selon l'une quelconque des revendications 1 à 5, **caractérisées en ce que** le polyester semi-cristallin (a) possède un poids moléculaire moyen en nombre compris entre 1600 et 17000, de préférence entre 2800 et 11200.

7. Compositions selon l'une quelconque des revendications 1 à 6, **caractérisées en ce que** le polyester semi-cristallin (a) présente une viscosité à l'état fondu de 5 à 10.000 mPa.s mesurée à 175°C au viscosimètre cône/plateau.

8. Compositions selon l'une quelconque des revendications 1 à 7, **caractérisées en ce que** le polyester semi-cristallin (a) présente une température de fusion d'environ 60 à 140°C.

9. Compositions selon l'une quelconque des revendications 1 à 8, **caractérisées en ce que** le polyester semi-cristallin (a) présente une température de transition vitreuse allant de -50 à 50°C.

10. Compositions selon l'une quelconque des revendications 1 à 9, **caractérisées en ce que** l'acide polycarboxylique entrant dans la composition du polyester amorphe (b) est choisi parmi l'acide maléique, l'acide fumarique, l'acide o-phtalique, l'acide téréphtalique, l'acide 1,2-cyclohexanedicarboxylique, l'acide 1,3-cyclohexanedicarboxylique, l'acide 1,4-cyclohexanedicarboxylique, l'acide succinique, l'acide glutarique, l'acide adipique, l'acide pimélique, l'acide subérique, l'acide azélaïque, l'acide sébacique, l'acide trimellitique, l'acide pyromellitique et leurs anhydrides, seuls ou en mélange.

11. Compositions selon l'une quelconque des revendications 1 à 10, **caractérisées en ce que** le polyol entrant dans la composition du polyester amorphe (b) est choisi parmi l'éthylène glycol, le diéthylène glycol, le propylène glycol, le 1,4-butanediol, le 1,6-hexanediol, le 1,4-cyclohexanediméthanol, le 2-méthyl-1,3-propanediol, le bisphénol A hydrogéné, l'hydroxypivalate de néopentylglycol, le triméthylolpropane, le ditriméthylolpropane, le triméthyloléthane, le pentaérythritol et leurs mélanges.

12. Compositions selon l'une quelconque des revendications 1 à 11, **caractérisées en ce que** le polyester amorphe (b) présente un indice d'acide de 15 à 100, et de préférence de 30 à 70 mg de KOH/g.

13. Compositions selon l'une quelconque des revendications 1 à 12, **caractérisées en ce que** le polyester amorphe (b) possède un poids moléculaire moyen en nombre compris entre 1100 et 11500, de préférence entre 1600 et 8500.

14. Compositions selon l'une quelconque des revendications 1 à 13, **caractérisées en ce que** le polyester amorphe (b) présente une viscosité à l'état fondu de 5 à 15000 mPa.s mesurée à 200°C au viscosimètre cône/plateau.

15. Compositions selon l'une quelconque des revendications 1 à 14, **caractérisées en ce que** le polyester amorphe (b) présente une température de transition vitreuse d'environ 40 à 80°C.

16. Compositions selon l'une quelconque des revendications 1 à 15, **caractérisées en ce que** le mélange des polyesters contient 5 à 45, de préférence 10 à 30 parties en poids du polyester semi-cristallin contenant des groupes carboxyle (a), et 55 à 95, de préférence 70 à 90 parties en poids du polyester amorphe (b), par rapport au poids total des polyesters.

17. Compositions selon l'une quelconque des revendications 1 à 16, **caractérisées en ce que** l'agent de réticulation est un composé polyépoxydé.

18. Compositions selon la revendication 17, **caractérisées en ce que** le composé polyépoxydé est l'isocyanurate de triglycidyle.

19. Compositions selon l'une quelconque des revendications 1 à 16, **caractérisées en ce que** l'agent de réticulation est un β-hydroxyalkylamide.

20. Compositions selon l'une quelconque des revendications 1 à 16, **caractérisées en ce que** l'agent de réticulation est un copolymère acrylique contenant des groupes glycidyle.

21. Compositions selon l'une quelconque des revendications 1 à 20, **caractérisées en ce qu'**on utilise l'agent de réticulation à raison de 0,25 à 1,4, de préférence de 0,6 à 1,05 équivalent de groupes carboxyle existant dans le polyester semi-cristallin (a) et le polyester amorphe (b), par équivalent de groupes époxy ou β-hydroxyalkyle.

22. Compositions selon l'une quelconque des revendications 1 à 21, **caractérisées en ce que** l'on utilise 4 à 50 parties en poids de l'agent de réticulation, 5 à 38,4 parties en poids du polyester semi-cristallin (a) et 30 à 86,4 parties en poids du polyester amorphe (b), par rapport au poids total de l'agent de réticulation et des polyesters.

23. Compositions selon l'une quelconque des revendications 1 à 22, **caractérisées en ce qu'**elle contiennent en outre jusqu'à 5% en poids, par rapport au poids des polyesters (a) et (b), d'un catalyseur de réticulation.

24. Compositions selon l'une quelconque des revendications 1 à 23, **caractérisées en ce qu'**elles contiennent jusqu'à 10% en poids par rapport au poids des polyesters (a) et (b) d'au moins un stabilisant choisi parmi les composés absorbant les rayons ultraviolets et/ou les amines à empêchement stérique.

25. Procédé de revêtement d'un article, de préférence métallique, **caractérisé en ce qu'**on applique sur ledit article une composition thermodurcissable en poudre selon l'une quelconque des revendications 1 à 24, par dépôt par pulvérisation au pistolet électrostatique ou triboélectrique ou par dépôt en lit fluidisé et **en ce qu'**on fait subir au revêtement ainsi obtenu une cuisson à une température de 150 à 220°C, pendant une durée d'environ 5 à 35 minutes.

26. Articles revêtus entièrement ou partiellement par le procédé selon la revendication 25.

## Claims

1. Thermosettable powder compositions comprising as a binder a mixture prepared from polyesters containing carboxyl groups and a cross-linking agent having functional groups capable of reacting with carboxyl groups, **characterised in that** the polyesters comprise
(a) a semicrystalline polyester containing carboxyl groups which is composed, in relation to the total alcohols, of from 85 to 100 mol.% of 1,4-cyclohexanediol and from 0 to 15 mol.% of at least one other aliphatic and/or cycloaliphatic polyol and, in relation to the total acids, from 85 to 100 mol.% of a straight-chain saturated aliphatic dicarboxylic acid having from 4 to 14 carbon atoms and from 0 to 15 mol.% of at least one other aliphatic and/or cycloaliphatic and/or aromatic polycarboxylic acid, and
(b) an amorphous polyester containing carboxyl groups which is composed, in relation to the total acids, of from 70 to 100 mol.% of isophthalic acid and from 0 to 30 mol.% of at least one other aliphatic and/or cycloaliphatic and/or aromatic polycarboxylic acid and, in relation to the total alcohols, from 70 to 100 mol.% of neopentyl glycol and/or 2-butyl-2-ethyl-1,3-propanediol and from 0 to 30 mol.% of at least one other aliphatic and/or cycloaliphatic polyol.

2. Compositions according to Claim 1, **characterised in that** the straight-chain saturated aliphatic dicarboxylic acid utilised in the composition of the semicrystalline polyester (a) is selected from among succinic acid, glutaric acid, adipic acid, pimelic acid, suberic acid, azelaic acid, sebacic acid and anhydrides thereof, either alone or in mixture, and preferably adipic acid.

3. Compositions according to any one of Claims 1 or 2, **characterised in that** the polycarboxylic acid utilised in the composition of the semicrystalline polyester (a) is selected from among 1,4-cyclohexanedicarboxylic acid, fumaric acid, maleic acid, trimellitic acid, pyromellitic acid and anhydrides thereof, either alone or in mixture.

4. Compositions according to any one of Claims 1 to 3, **characterised in that** the polyol utilised in the composition of the semicrystalline polyester (a) is selected from among ethylene glycol, propylene glycol, 1,4-butanediol, 1,6-hexanediol, 1,4-cyclohexanedimethanol, hydrogenated bisphenol A, trimethylolpropane, ditrimethylolpropane, trimethylolethane, pentaerythritol and mixtures thereof.

5. Compositions according to any one of Claims 1 to 4, **characterised in that** the semicrystalline polyester (a) exhibits an acid value of from 10 to 70 mg KOH/g, and preferably of between 15 and 40 mg KOH/g.

6. Compositions according to any one of Claims 1 to 5, **characterised in that** the semicrystalline polyester (a) has a number average molecular weight of between 1600 and 17000, preferably between 2800 and 11200.

7. Compositions according to any one of Claims 1 to 6, **characterised in that** the semicrystalline polyester (a) exhibits a melt viscosity of from 5 to 10,000 mPa.s, measured at 175° on a cone/plate viscometer.

8. Compositions according to any one of Claims 1 to 7, **characterised in that** the semicrystalline polyester (a) exhibits a melting temperature of approximately 60 to 140°C.

9. Compositions according to any one of Claims 1 to 8, **characterised in that** the semicrystalline polyester (a) exhibits a glass transition temperature within the range -50 to 50°C.

10. Compositions according to any one of Claims 1 to 9, **characterised in that** the polycarboxylic acid utilised in the composition of the amorphous polyester (b) is selected from among maleic acid, fumaric acid, o-phthalic acid, terephthalic acid, 1,2-cyclohexanedicarboxylic acid, 1,3-cyclohexanedicarboxylic acid, 1,4-cyclohexanedicarboxylic acid, succinic acid, glutaric acid, adipic acid, pimelic acid, suberic acid, azelaic acid, sebacic acid, trimellitic acid, pyromellitic acid and anhydrides thereof, either alone or in mixture.

11. Compositions according to any one of Claims 1 to 10, **characterised in that** the polyol utilised in the composition of the amorphous polyester (b) is selected from among ethylene glycol, diethylene glycol, propylene glycol, 1,4-butanediol, 1,6-hexanediol, 1,4-cyclohexanedimethanol, 2-methyl-1,3-propanediol, hydrogenated bisphenol A, neopentyl glycol hydroxypivalate, trimethylolpropane, ditrimethylolpropane, trimethylolethane, pentaerythritol and mixtures thereof.

12. Compositions according to any one of Claims 1 to 11, **characterised in that** the amorphous polyester (b) exhibits an acid value of from 15 to 100 mg KOH/g, and preferably from 30 to 70 mg KOH/g.

13. Compositions according to any one of Claims 1 to 12, **characterised in that** the amorphous polyester (b) has a number average molecular weight of between 1100 and 11500, preferably between 1600 and 8500.

14. Compositions according to any one of Claims 1 to 13, **characterised in that** the amorphous polyester (b) exhibits a melt viscosity of from 5 to 15000 mPa.s, measured at 200°C on a cone/plate viscometer.

15. Compositions according to any one of Claims 1 to 14, **characterised in that** the amorphous polyester (b) exhibits a glass transition temperature of approximately 40 to 80°C.

16. Compositions according to any one of Claims 1 to 15, **characterised in that** the polyester mixture contains from 5 to 45, preferably 10 to 30, parts by weight of the semicrystalline polyester containing carboxyl groups (a), and from 55 to 95, preferably 70 to 90, parts by weight of the amorphous polyester (b), in relation to the total weight of polyesters.

17. Compositions according to any one of Claims 1 to 16, **characterised in that** the cross-linking agent is a polyepoxy compound.

18. Compositions according to Claim 17, **characterised in that** the polyepoxy compound is triglycidyl isocyanurate.

19. Compositions according to any one of Claims 1 to 16, **characterised in that** the cross-linking agent is a β-hydroxyalkylamide.

20. Compositions according to any one of Claims 1 to 16, **characterised in that** the cross-linking agent is an acrylic copolymer containing glycidyl groups.

21. Compositions according to any one of Claims 1 to 20, **characterised in that** the cross-linking agent is used at a rate of from 0.25 to 1.4 equivalent, preferably from 0.6 to 1.05 equivalent, of carboxyl groups present in the semicrystalline polyester (a) and the amorphous polyester (b), per equivalent of epoxy or β-hydroxyalkyl groups.

22. Compositions according to any one of Claims 1 to 21, **characterised in that** from 4 to 50 parts by weight of the cross-linking agent, from 5 to 38.4 parts by weight of the semicrystalline polyester (a) and from 30 to 86.4 parts by weight of the amorphous polyester (b) are used, in relation to the total weight of cross-linking agent and polyesters.

23. Compositions according to any one of Claims 1 to 22, **characterised in that** they contain additionally up to 5 wt.%, in relation to the weight of polyesters (a) and (b), of a cross-linking catalyst.

24. Compositions according to any one of Claims 1 to 23, **characterised in that** they contain up to 10 wt.%, in relation to the weight of polyesters (a) and (b), of at least one stabiliser selected from among ultraviolet radiation-absorbing compounds and/or sterically hindered amines.

25. Process for the coating of a preferably metallic article, **characterised in that** a thermosettable powder composition according to any one of Claims 1 to 24 is applied to the said article by spray deposition with an electrostatic or triboelectric gun or by fluidised bed deposition, and the coating thus obtained is subjected to stoving at a temperature of from 150 to 220°C for a duration of from approximately 5 to 35 minutes.

26. Articles coated in their entirety or partially by the process according to Claim 25.

## Patentansprüche

1. Pulverförmige wärmehärtbare Zusammensetzungen, die als Bindemittel ein Gemisch aus Carboxylgruppen enthaltenden Polyestern und einem Vernetzungsmittel, das funktionelle Gruppen hat, die mit den Carboxylgruppen reagieren können, umfassen, **dadurch gekennzeichnet, dass** die Polyester
(a) einen semikristallinen Carboxylgruppen enthaltenden Polyester, der, bezogen auf die Alkohol-Gesamtmenge, aus 85 bis 100 Mol-% 1,4-Cyclohexandiol und 0 bis 15 Mol-% wenigstens eines anderen aliphatischen und/oder cycloaliphatischen Polyols, und, bezogen auf die Säure-Gesamtmenge, aus 85 bis 100 Mol-% einer gesättigten aliphatischen Dicarbonsäure mit linearer Kette mit 4 bis 14 Kohlenstoffatomen und 0 bis 15 Mol-% wenigstens einer anderen aliphatischen und/oder cycloaliphatischen und/oder aromatischen Polycarbonsäure besteht, und
(b) einen amorphen Carboxylgruppen enthaltenden Polyester, der, bezogen auf die Säure-Gesamtmenge, aus 70 bis 100 Mol-% Isophthalsäure und 0 bis 30 Mol-% wenigstens einer anderen aliphatischen und/oder cycloaliphatischen und/oder aromatischen Polycarbonsäure und, bezogen auf die Alkohol-Gesamtmenge, aus 70 bis 100 Mol-% Neopentylglykol und/oder 2-Butyl-2-ethyl-1,3-propandiol und 0 bis 30 Mol-% wenigstens eines anderen aliphatischen und/oder cycloaliphatischen Polyols besteht,
umfassen.

2. Zusammensetzungen gemäß Anspruch 1, **dadurch gekennzeichnet, dass** die in die Zusammensetzung des semikristallinen Polyesters (a) eingehende gesättigte aliphatische Dicarbonsäure mit linearer Kette unter der Bernsteinsäure, Glutarsäure, Adipinsäure, Pimelinsäure, Suberinsäure, Azelainsäure, Sebacinsäure und deren Anhydriden, allein oder im Gemisch, und vorzugsweise der Adipinsäure ausgewählt ist.

3. Zusammensetzungen gemäß einem der Ansprüche 1 oder 2, **dadurch gekennzeichnet, dass** die in die Zusammensetzung des semikristallinen Polyesters (a) eingehende Polycarbonsäure unter der 1,4-Cyclohexandicarbonsäure, Fumarsäure, Maleinsäure, Trimellithsäure, Pyromellithsäure und deren Anhydriden, allein oder im Gemisch, ausgewählt ist.

4. Zusammensetzungen gemäß einem der Ansprüche 1 bis 3, **dadurch gekennzeichnet, dass** das in die Zusammensetzung des semikristallinen Polyesters (a) eingehende Polyol unter Ethylenglykol, Propylenglykol, 1,4-Butandiol, 1,6-Hexandiol, 1,4-Cyclohexandimethanol, hydriertem Bisphenol A, Trimethylolpropan, Ditrimethylolpropan, Trimethylolethan, Pentaerythritol und deren Gemischen ausgewählt ist.

5. Zusammensetzungen gemäß einem der Ansprüche 1 bis 4, **dadurch gekennzeichnet, dass** der semikristalline Polyester (a) eine Säurezahl von 10 bis 70 mg KOH/g und vorzugsweise zwischen 15 und 40 mg KOH/g aufweist.

6. Zusammensetzungen gemäß einem der Ansprüche 1 bis 5, **dadurch gekennzeichnet, dass** der semikristalline Polyester (a) ein Zahlenmittel des Molekulargewichts zwischen 1600 und 17000, vorzugsweise zwischen 2800 und 11200 besitzt.

7. Zusammensetzungen gemäß einem der Ansprüche 1 bis 6, **dadurch gekennzeichnet, dass** der semikrlstalline Polyester (a) eine Viskosität in geschmolzenem Zustand von 5 bis 10000 mPa·s, gemessen bei 175 °C mit einem Kegel/Platte-Viskosimeter, aufweist.

8. Zusammensetzungen gemäß einem der Ansprüche 1 bis 7, **dadurch gekennzeichnet, dass** der semikristalline Polyester (a) eine Schmelztemperatur von ungefähr 60 bis 140 °C aufweist.

9. Zusammensetzungen gemäß einem der Ansprüche 1 bis 8, **dadurch gekennzeichnet, dass** der semikristalline Polyester (a) eine Glasübergangstemperatur, die von -50 bis 50 °C geht, aufweist.

10. Zusammensetzungen gemäß einem der Ansprüche 1 bis 9, **dadurch gekennzeichnet, dass** die in die Zusammensetzung des amorphen Polyesters (b) eingehende Polycarbonsäure unter der Maleinsäure, Fumarsäure, o-Phthalsäure, Terephthalsäure, 1,2-Cyclohexandicarbonsäure, 1,3-Cyclohexandicarbonsäure, 1,4-Cyclohexandicarbonsäure, Bernsteinsäure, Glutarsäure, Adipinsäure, Pimelinsäure, Suberinsäure, Azelainsäure, Sebacinsäure, Trimellithsäure, Pyromellithsäure und deren Anhydriden, allein oder im Gemisch, ausgewählt ist.

11. Zusammensetzungen gemäß einem der Ansprüche 1 bis 10, **dadurch gekennzeichnet, dass** das in die Zusammensetzung des amorphen Polyesters (b) eingehende Polyol unter Ethylenglykol, Diethylenglykol, Propylenglykol, 1,4-Butandiol, 1,6-Hexandiol, 1,4-Cyclohexandimethanol, 2-Methyl-1,3-propandiol, hydriertem Bisphenol A, Neopentylglykolhydroxypivalat, Trimethylolpropan, Ditrimethylolpropan, Trimethylolethan, Pentaerythritol und deren Gemischen ausgewählt ist.

12. Zusammensetzungen gemäß einem der Ansprüche 1 bis 11, **dadurch gekennzeichnet, dass** der amorphe Polyester (b) eine Säurezahl von 15 bis 100 und vorzugsweise von 30 bis 70 mg KOH/g aufweist.

13. Zusammensetzungen gemäß einem der Ansprüche 1 bis 12, **dadurch gekennzeichnet, dass** der amorphe Polyester (b) ein Zahlenmittel des Molekulargewichts zwischen 1100 und 11500, vorzugsweise zwischen 1600 und 8500 besitzt.

14. Zusammensetzungen gemäß einem der Ansprüche 1 bis 13, **dadurch gekennzeichnet, dass** der amorphe Polyester (b) eine Viskosität in geschmolzenem Zustand von 5 bis 15000 mPas, gemessen bei 200 °C mit einem Kegel/Platte-Viskosimeter, aufweist.

15. Zusammensetzungen gemäß einem der Ansprüche 1 bis 14, **dadurch gekennzeichnet, dass** der amorphe Polyester (b) eine Glasübergangstemperatur von ungefähr 40 bis 80 °C aufweist.

16. Zusammensetzungen gemäß einem der Ansprüche 1 bis 15, **dadurch gekennzeichnet, dass** das Polyester-Gemisch, bezogen auf das Polyester-Gesamtgewicht, 5 bis 45, vorzugsweise 10 bis 30 Gewichtsteile des semikristallinen Polyesters (a), der Carboxylgruppen enthält, und 55 bis 95, vorzugsweise 70 bis 90 Gewichtsteile des amorphen Polyesters (b) aufweist.

17. Zusammensetzungen gemäß einem der Ansprüche 1 bis 16, **dadurch gekennzeichnet, dass** das Vernetzungsmittel eine polyepoxidierte Verbindung ist.

18. Zusammensetzungen gemäß Anspruch 17, **dadurch gekennzeichnet, dass** die polyepoxidierte Verbindung Triglycidylisocyanurat ist.

19. Zusammensetzungen gemäß einem der Ansprüche 1 bis 16, **dadurch gekennzeichnet, dass** das Vernetzungsmittel ein β-Hydroxyalkylamid ist.

20. Zusammensetzungen gemäß einem der Ansprüche 1 bis 16, **dadurch gekennzeichnet, dass** das Vernetzungsmittel ein Acrylcopolymer ist, das Glycidylgruppen enthält.

21. Zusammensetzungen gemäß einem der Ansprüche 1 bis 20, **dadurch gekennzeichnet, dass** man das Vernetzungsmittel pro Equivalent an Epoxy- oder β-Hydroxyalkylgruppen, in einer Menge von 0,25 bis 1,4, vorzugsweise von 0,6 bis 1,05 Equivalenten an Carboxylgruppen, die im semikristallinen Polyester (a) und dem amorphen Polyester (b) vorhanden sind, verwendet.

22. Zusammensetzungen gemäß einem der Ansprüche 1 bis 21, **dadurch gekennzeichnet, dass** man, bezogen auf die Gesamtmenge des Vernetzungsmittels und der Polyester, 4 bis 50 Gewichtsteile des Vemetzungsmittels, 5 bis 38,4 Gewichtsteile des semikristallinen Polyesters (a) und 30 bis 86,4 Gewichtsteile des amorphen Polyesters (b) verwendet.

23. Zusammensetzungen gemäß einem der Ansprüche 1 bis 22, **dadurch gekennzeichnet, dass** sie außerdem, bezogen auf das Gewicht der Polyester (a) und (b), bis zu 5 Gew.-% eines Vernetzungskatalysators enthalten.

24. Zusammensetzungen gemäß einem der Ansprüche 1 bis 23, **dadurch gekennzeichnet, dass** sie, bezogen auf das Gewicht der Polyester (a) und (b), bis zu 10 Gew.-% wenigstens eines Stabilisators enthalten, der unter den Ultraviolettstrahlen absorbierenden Verbindungen und/oder den sterisch gehinderten Aminen ausgewählt ist.

25. Verfahren zur Beschichtung eines vorzugsweise metallischen Gegenstands, **dadurch gekennzeichnet, dass** man auf besagten Gegenstand durch Zerstäubungsbeschichtung mit einer elektrostatischen oder triboelektrischen Spritzpistole oder durch Beschichtung im Fließbett eine pulverförmige wärmehärtbare Zusammensetzung gemäß einem der Ansprüche 1 bis 24 aufbringt, und dass man an dem so erhaltenen Überzug während einer Dauer von ungefähr 5 bis 35 Minuten ein Härten bei einer Temperatur von 150 bis 220 °C vollzieht.

26. Durch das Verfahren gemäß Anspruch 25 vollständig oder teilweise beschichtete Gegenstände.
